# EUROPEAN PATENT APPLICATION

(11) **EP 2 827 140 A1**
(43) Date of publication of application: **21.01.2015**
(21) Application number: 13761636.3
(22) Date of filing: 11.03.2013
(51) Int. Cl.: G01N 27/327, G01N 27/416

(54) **METHOD FOR MANUFACTURING BIOSENSOR**

(30) Priority: 15.03.2012 JP 2012058431
(71) Applicant: Murata Manufacturing Co., Ltd., Nagaokakyo-shi, Kyoto 617-8555 (JP)
(72) Inventor: TAKAGI, Jun, Nagaokakyo-shi, Kyoto 617-8555 (JP); OOE, Hideaki, Nagaokakyo-shi, Kyoto 617-8555 (JP); YOKOYAMA, Kenji, Tokyo 100-8921 (JP); HIRATSUKA, Atsunori, Tokyo 100-8921 (JP); SASAKI, Noriko, Tokyo 100-8921 (JP)
(74) Representative: Herrmann, Uwe
(86) International application number: PCT/JP2013/056595
(87) International publication number: WO 2013/137173

(57) **Abstract**

Provided is a technique capable of easily manufacturing a biosensor in which each of an enzyme layer and a mediator layer contains a hydrophilic polymer having no double bond of oxygen atoms and thereby which can be stored for a long period. Since an enzyme layer 106b and a mediator layer 106c are formed together as a reaction layer 106, there is no need to individually form enzyme layer 106b and mediator layer 106c on a cover layer 130 and an electrode layer 110, respectively, as in a conventional biosensor, and reaction layer 106 can be easily formed. Since each of enzyme layer 106b and mediator layer 106c contains the hydrophilic polymer having no double bond of oxygen atoms, a reaction between an enzyme and a mediator can be suppressed, and reduction of the mediator in mediator layer 106c can be suppressed, in a stored state. Therefore, a biosensor 100 which can be stored for a long period can be easily manufactured.

## Description

### TECHNICAL FIELD

The present invention relates to a method for manufacturing a biosensor including an electrode layer in which an electrode system including a working electrode and a counter electrode is provided, a spacer layer in which a slit for forming a cavity is formed and which is stacked on the electrode layer, a cover layer in which an air hole communicating to the cavity is formed and which is stacked on the spacer layer, and a reaction layer provided on the working electrode and the counter electrode.

### BACKGROUND ART

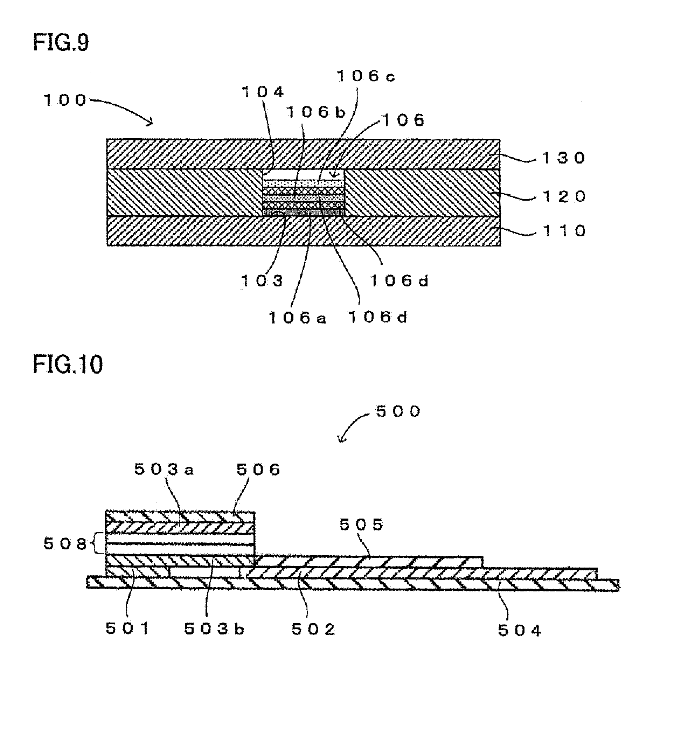

There has been known a substance measurement method that quantifies a substance to be measured by measuring, by means of a biosensor 500 which has an electrode system including a working electrode 501, a counter electrode (not shown), and a reference electrode 502, and a reaction layer composed of an enzyme layer 503a containing an enzyme which specifically reacts with the substance to be measured and a mediator layer 503b containing a mediator as shown in a conventional biosensor of Fig. 10, an oxidation current obtained by oxidizing a reducing substance produced by a reaction between the substance to be measured which is contained in a sample and the reaction layer, by applying a voltage between working electrode 501 and the counter electrode (see, for example, Patent Document 1).

Biosensor 500 shown in Fig. 10 is formed by stacking an electrode layer 504 formed by providing electrodes on an insulating substrate made of such as polyethylene terephthalate or polyimide, an insulator layer 505 for preventing short circuit between the electrodes provided on the electrode layer, and a cover layer 506. Further, mediator layer 503b is provided to electrode layer 504, and enzyme layer 503a is provided to cover layer 506. Electrode layer 504 and cover layer 506 are bonded to each other using adhesive layers 508 made of a double-sided tape attached thereto, and thereby enzyme layer 503a and mediator layer 503b are arranged separately and apart from each other.

The electrode system is formed on electrode layer 504 by providing working electrode 501, the counter electrode, and reference electrode 502 on electrode layer 504 and providing electrode patterns electrically connected to these electrodes 501, 502.

Then, when a liquid sample is supplied into a space where enzyme layer 503a and mediator layer 503b face each other, the supplied sample comes into contact with electrodes 501, 502 and the reaction layer, and the reaction layer is dissolved in the sample.

Enzyme layer 503a provided to cover layer 506 contains glucose oxidase specifically reacting with glucose contained in the sample and a hydrophilic polymer. Mediator layer 503b provided on working electrode 501 and the counter electrode contains potassium ferricyanide as a mediator (electron acceptor) and a hydrophilic polymer. The hydrophilic polymer contained in each of enzyme layer 503a and mediator layer 503b prevents delamination of these layers 503a, 503b.

Furthermore, ferricyanide ions produced by dissolution of potassium ferricyanide in the sample is reduced to ferrocyanide ions serving as a reductant, by electrons emitted when glucose reacts with glucose oxidase and is oxidized to gluconolactone. Therefore, when the sample containing glucose is supplied to biosensor 500, ferricyanide ions are reduced by electrons emitted by the oxidation of glucose, and thus ferrocyanide ions serving as the reductant of ferricyanide ions are produced in an amount in accordance with a concentration of glucose which is contained in the sample and oxidized by an enzyme reaction.

In biosensor 500 configured as described above, an oxidation current obtained by oxidizing the reductant of the mediator produced as a result of the enzyme reaction on working electrode 501 has a magnitude dependent on the concentration of glucose in the sample. Therefore, glucose contained in the sample can be quantified by measuring the oxidation current.

### CITATION LIST

### PATENT DOCUMENT

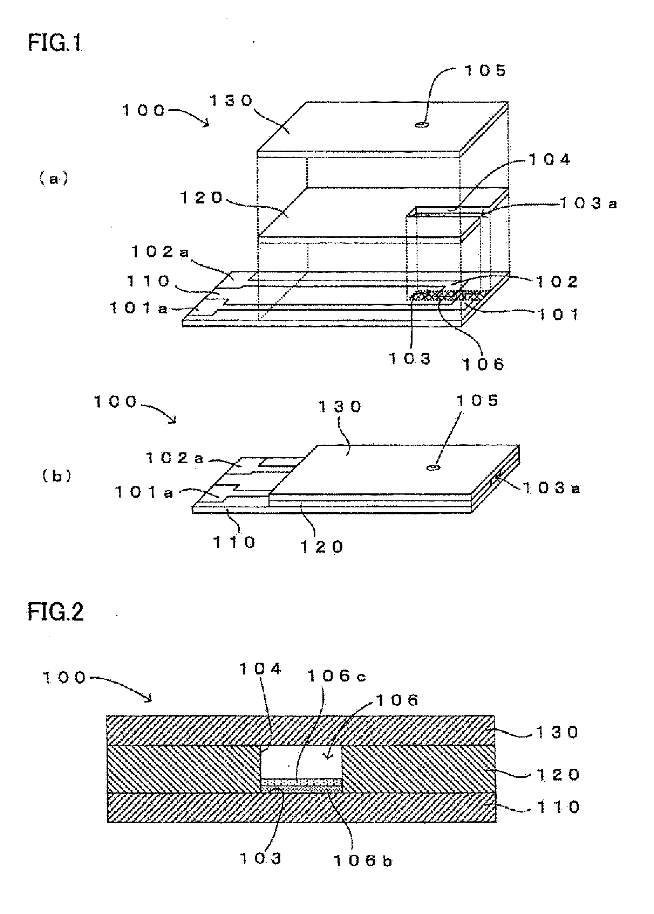

PTD 1: Japanese Patent Laying-Open No. 2009-244012 (paragraphs 0016 to 0092, Figs. 1, 2, Abstract, and the like)

### SUMMARY OF INVENTION

### TECHNICAL PROBLEM

There is a possibility that, when the enzyme contained in enzyme layer 503a and the mediator contained in mediator layer 503b react with each other in a state where biosensor 500 is stored, the mediator is reduced over time, and thereby accuracy of measuring the substance to be measured using biosensor 500 may be deteriorated. Accordingly, in biosensor 500 described above, reduction of the mediator by the enzyme is prevented by separately arranging enzyme layer 503a and mediator layer 503b forming the reaction layer in a state apart from each other. Although this configuration can prevent a reaction between the enzyme and the mediator and resultant deterioration of the reaction layer while biosensor 500 is stored for a long period, mediator layer 503b and enzyme layer 503a should be formed individually on electrode layer 504 and cover layer 506, respectively, which has required time and effort and caused an increase in manufacturing cost.

Further, the hydrophilic polymer contained in each of enzyme layer 503a and mediator layer 503b has a function of preventing delamination of layers 503a, 503b. It also has a function of suppressing, for example when a blood sample is supplied to biosensor 500, influence of a hematocrit value of the blood sample on measurement by filtering the blood sample to inhibit movement of blood cells. On the other hand, it has been known that a hydrophilic polymer reduces the mediator contained in mediator layer 503b. For example, while biosensor 500 is stored for a long period, reduction of the mediator by the hydrophilic polymer gradually proceeds, and thus when the oxidation current described above is measured, an oxidation current generated by oxidation of the reductant of the mediator reduced by the hydrophilic polymer is also measured as a background current, together with the oxidation current to be measured. Therefore, measurement accuracy is deteriorated.

Consequently, conventionally, an expiration date is set for biosensor 500, and biosensor 500 which has been stored for a long period past its expiration date is discarded because its measurement accuracy is deteriorated, causing an increase in running cost in measurement of the substance to be measured which is contained in the sample. As described above, conventionally, influence of the hydrophilic polymer on the mediator has not been fully considered.

The present invention has been made in view of the aforementioned problem, and one object of the present invention is to provide a technique capable of easily manufacturing a biosensor in which each of an enzyme layer and a mediator layer contains a hydrophilic polymer having no double bond of oxygen atoms and thereby which can be stored for a long period.

### SOLUTION TO PROBLEM

In order to achieve the object described above, provided is a method for manufacturing a biosensor including: an electrode layer in which an electrode system including a working electrode and a counter electrode is provided on one surface of an insulating substrate; a spacer layer in which a slit is formed and which is stacked on the one surface of the electrode layer with the slit being arranged on tip end sides of the working electrode and the counter electrode; a cavity which is formed by the electrode layer and the slit and into which a sample is to be supplied; a cover layer in which an air hole communicating to the cavity is formed and which is stacked on the spacer layer to cover the cavity; and a reaction layer provided on the tip end sides of the working electrode and the counter electrode exposed at the cavity, the method including a reaction layer formation step having: an enzyme layer formation step of forming an enzyme layer containing an enzyme which reacts with a substance to be measured and a hydrophilic polymer having no double bond of oxygen atoms; and a mediator layer formation step of forming a mediator layer containing a mediator and a hydrophilic polymer having no double bond of oxygen atoms (claim 1).

In the invention configured as described above, the reaction layer provided on the tip end sides of the working electrode and the counter electrode exposed at the cavity formed by the slit in the spacer layer is formed by the reaction layer formation step having the enzyme layer formation step of forming the enzyme layer containing the enzyme which reacts with the substance to be measured and the hydrophilic polymer having no double bond of oxygen atoms, and the mediator layer formation step of forming the mediator layer containing the mediator and the hydrophilic polymer having no double bond of oxygen atoms. Accordingly, since the enzyme layer and the mediator layer are formed together as the reaction layer on the tip end sides of the working electrode and the counter electrode provided on the electrode layer, there is no need to individually form the enzyme layer and the mediator layer on the cover layer and the electrode layer, respectively, as in a conventional biosensor, and the reaction layer can be easily formed.

Further, by forming the enzyme layer containing the enzyme and the hydrophilic polymer having no double bond of oxygen atoms and the mediator layer containing the mediator and the hydrophilic polymer having no double bond of oxygen atoms, the reaction layer is formed with the enzyme contained in the enzyme layer and the mediator contained in the mediator layer being surrounded by the hydrophilic polymers having no double bond of oxygen atoms, and with the enzyme being separated from the mediator. As a result of the earnest study by the inventors of the present application, it is considered that, when a hydrophilic polymer has a double bond of oxygen atoms, a functional group which has a double bond of oxygen atoms performs nucleophilic attack on a mediator and thereby the mediator is reduced. Accordingly, with this configuration, since the enzyme and the mediator are surrounded by the hydrophilic polymers having no double bond of oxygen atoms, contact between the mediator and the enzyme contained in the reaction layer can be prevented, and reduction of the mediator by the hydrophilic polymer can be suppressed, in a state where the biosensor is stored.

Therefore, a biosensor which can be stored for a long period can be easily manufactured by adopting this reagent structure.

In addition, the mediator layer is formed after the enzyme layer is formed, and the enzyme layer is arranged at a position closer to the electrode layer. Since the enzyme has a diffusion rate smaller than that of the mediator, the amount of the enzyme and the mediator in the vicinity of the electrode is larger than that in a case where the enzyme is stacked on the mediator, and thus responsiveness and measurement accuracy of the sensor are improved.

Further, desirably, the reaction layer formation step further has a first intermediate layer formation step of forming a first intermediate layer containing a hydrophilic polymer having no double bond of oxygen atoms, performed after the enzyme layer formation step and before the mediator layer formation step (claim 2).

With this configuration, since the first intermediate layer containing the hydrophilic polymer having no double bond of oxygen atoms is formed between the enzyme layer and the mediator layer by the first intermediate layer formation step, the first intermediate layer prevents the enzyme contained in the enzyme layer from coming into contact with the mediator contained in the mediator layer. Therefore, the reaction between the enzyme contained in the enzyme layer and the mediator contained in the mediator layer can be further suppressed.

Further, the reaction layer formation step may further have a hydrophilic layer formation step of forming a hydrophilic layer containing a hydrophilic polymer having a double bond of oxygen atoms, performed before the enzyme layer formation step (claim 3).

With this configuration, before the enzyme layer is formed, the hydrophilic layer containing the hydrophilic polymer having a double bond of oxygen atoms is formed by the hydrophilic layer formation step. Generally, a hydrophilic polymer having a double bond of oxygen atoms has a higher effect of inhibiting movement of blood cells and the like than a hydrophilic polymer having no double bond of oxygen atoms. Therefore, since the hydrophilic layer provided on the electrode layer contains the hydrophilic polymer having a double bond of oxygen atoms, for example when a blood sample is supplied into the cavity in the biosensor, the hydrophilic polymer in the hydrophilic layer efficiently filters the blood sample to inhibit movement of blood cells contained in the blood sample. Thus, influence on measurement accuracy due to a difference in the hematocrit value of the blood sample can be decreased. Therefore, an accurate and reliable biosensor can be provided.

Further, desirably, the reaction layer formation step further has a second intermediate layer formation step of forming a second intermediate layer containing a hydrophilic polymer having no double bond of oxygen atoms, performed after the hydrophilic layer formation step and before the enzyme layer formation step (claim 4).

With this configuration, since the second intermediate layer containing the hydrophilic polymer having no double bond of oxygen atoms is formed between the hydrophilic layer and the enzyme layer by the second intermediate layer formation step, the second intermediate layer prevents the hydrophilic polymer having a double bond of oxygen atoms contained in the hydrophilic layer from coming into contact with the mediator contained in the mediator layer. Thus, reduction of the mediator contained in the mediator layer by the hydrophilic polymer in the hydrophilic layer can be further suppressed.

Further, the hydrophilic polymer having no double bond of oxygen atoms desirably includes at least one of hydroxypropyl methylcellulose, hydroxypropyl cellulose, methylcellulose, hydroxyethyl cellulose, hydroxyethyl methylcellulose, polyvinyl alcohol, and polyethylene glycol (claim 5).

With this configuration, since at least one of hydroxypropyl methylcellulose, hydroxypropyl cellulose, methylcellulose, hydroxyethyl cellulose, hydroxyethyl methylcellulose, polyvinyl alcohol, and polyethylene glycol is contained in a reagent layer as the hydrophilic polymer having no double bond of oxygen atoms, reduction of the mediator contained in the reagent layer can be prevented, and delamination of the reagent layer from the hydrophilic layer can be prevented. Thus, a biosensor having a practical configuration can be provided.

Further, the hydrophilic polymer having a double bond of oxygen atoms desirably includes at least carboxymethyl cellulose (claim 6).

With this configuration, since the hydrophilic layer containing at least carboxymethyl cellulose as the hydrophilic polymer having a double bond of oxygen atoms is provided on the electrode layer, delamination of the reagent layer stacked on the hydrophilic layer can be prevented. Further, for example when a blood sample is supplied into the cavity in the biosensor, the hydrophilic polymer in the hydrophilic layer filters the blood sample to inhibit movement of blood cells contained in the blood sample. Thus, influence on measurement accuracy due to a difference in the hematocrit value of the blood sample can be decreased.

### ADVANTAGEOUS EFFECTS OF INVENTION

According to the present invention, since the enzyme layer and the mediator layer are formed together as the reaction layer on the tip end sides of the working electrode and the counter electrode provided on the electrode layer, there is no need to individually form the enzyme layer and the mediator layer on the cover layer and the electrode layer, respectively, as in a conventional biosensor, and the reaction layer can be easily formed. Since each of the enzyme layer and the mediator layer contains the hydrophilic polymer having no double bond of oxygen atoms, contact between the enzyme contained in the enzyme layer and the mediator contained in the mediator layer can be suppressed, and reduction of the mediator in the mediator layer can be suppressed, in a stored state. Therefore, a biosensor which can be stored for a long period can be easily manufactured.

### BRIEF DESCRIPTION OF DRAWINGS

Fig. 1 shows a biosensor in accordance with a first embodiment of the present invention, in which Fig. 1 (a) is an exploded perspective view and Fig. 1 (b) is a perspective view.
Fig. 2 is a cross sectional view of a cavity portion of the biosensor of Fig. 1.
Fig. 3 shows a method for manufacturing the biosensor in accordance with the first embodiment of the present invention, in which Figs. 3(a) and 3(b) show different steps.
Fig. 4 shows the relation between a storage period and a background current of the biosensor.
Fig. 5 is a cross sectional view of a cavity portion of a biosensor in accordance with a second embodiment of the present invention.
Fig. 6 is a cross sectional view of a cavity portion of a biosensor in accordance with a third embodiment of the present invention.
Fig. 7 is a cross sectional view of a cavity portion of a variation of the biosensor.
Fig. 8 is a cross sectional view of a cavity portion of a biosensor in accordance with a fourth embodiment of the present invention.
Fig. 9 is a cross sectional view of a cavity portion of a variation of the biosensor.
Fig. 10 is a view showing a conventional biosensor.

### DESCRIPTION OF EMBODIMENTS

### <First Embodiment>

A biosensor and a method for manufacturing the biosensor in accordance with a first embodiment of the present invention will be described with reference to Figs. 1 to 4.

### (Configuration of Biosensor and Manufacturing Method Therefor)

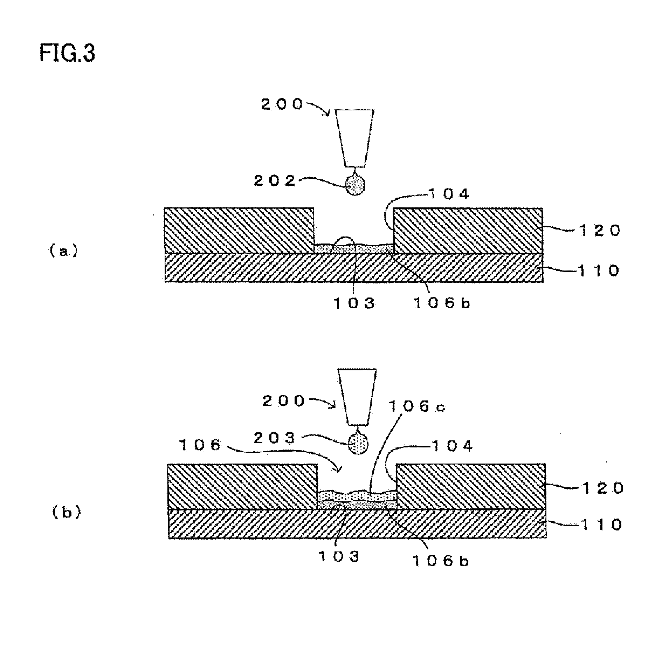

Fig. 1 shows a biosensor in accordance with a first embodiment of the present invention, in which Fig. 1 (a) is an exploded perspective view and Fig. 1 (b) is a perspective view. Fig. 2 is a cross sectional view of a cavity portion of the biosensor of Fig. 1. Fig. 3 shows a method for manufacturing the biosensor in accordance with the first embodiment of the present invention, in which Figs. 3(a) and 3(b) show different steps.

A biosensor 100 in accordance with the present invention has an electrode system including a working electrode 101 and a counter electrode 102, and a reaction layer 106 containing a mediator and an enzyme which reacts with a substance to be measured, and is intended to be attached to a measuring instrument (not shown) for use. Namely, biosensor 100 quantifies a substance to be measured which is contained in a sample, by measuring an oxidation current obtained by oxidizing a reducing substance produced by a reaction between the substance to be measured such as glucose contained in the sample such as blood supplied into a cavity 103 provided on a tip end side of biosensor 100 attached to the measuring instrument and reaction layer 106 provided in biosensor 100, by applying a voltage between working electrode 101 and counter electrode 102.

Specifically, biosensor 100 is formed by stacking and bonding an electrode layer 110 in which the electrode system including working electrode 101 and counter electrode 102 is provided, a cover layer 130 in which an air hole 105 communicating to cavity 103 is formed, and a spacer layer 120 in which a slit 104 for forming cavity 103 is formed and which is arranged between electrode layer 110 and cover layer 130, each of these layers being formed of an insulating material such as ceramics, glass, plastic, paper, a biodegradable material, or polyethylene terephthalate, with their tip end sides, which are provided with a sample introduction port 103a, being aligned, as shown in Figs. 1 and 2. Further, on working electrode 101 and counter electrode 102 is provided reaction layer 106 containing the enzyme which reacts with the substance to be measured such as glucose contained in the sample. Biosensor 100 is attached to the measuring instrument by being inserted into and attached to a predetermined insertion port in the measuring instrument from a rear end side.

In the present embodiment, electrode layer 110 is formed of an insulating substrate made of an insulating material such as polyethylene terephthalate. Further, on one surface of the insulating substrate forming electrode layer 110, a conductive layer made of a noble metal such as platinum, gold, or palladium or a conductive substance such as carbon, copper, aluminum, titanium, ITO, or ZnO is formed by screen printing or a sputtering deposition method. Then, a pattern is formed on the conductive layer formed on the one surface of the insulating substrate by laser processing or photolithography, thereby forming the electrode system which includes working electrode 101 and counter electrode 102, and electrode patterns 101 a, 102a which electrically connect working electrode 101 and counter electrode 102 with the measuring instrument when biosensor (sensor chip) 100 is attached to the measuring instrument.

Further, working electrode 101 and counter electrode 102 are arranged such that their tip end sides are exposed at cavity 103. Furthermore, electrode patterns 101 a, 102a on rear end sides of working electrode 101 and counter electrode 102, respectively, are formed to extend to an end edge of electrode layer 110 which is opposite to sample introduction port 103a and on which spacer layer 120 is not stacked.

Next, spacer layer 120 is stacked on electrode layer 110 formed as described above. Spacer layer 120 is formed of a substrate made of an insulating material such as polyethylene terephthalate, and slit 104 for forming cavity 103 is formed in substantially the center of a tip end edge portion of the substrate. Spacer layer 120 is stacked to partially cover one surface of electrode layer 110 with slit 104 being arranged on the tip end sides of working electrode 101 and counter electrode 102, and thereby cavity 103 into which the sample is to be supplied is formed by electrode layer 110 and slit 104.

Subsequently, the portion of cavity 103 formed by stacking spacer layer 120 on electrode layer 110 is subjected to cleaning treatment by means of plasma, and thereafter reaction layer 106 is formed. It is noted that, as the plasma used in the plasma cleaning step, various plasmas used in metal activation treatment by means of plasma such as oxygen plasma, nitrogen plasma, and argon plasma can be used, and low-pressure plasma or atmospheric-pressure plasma may be used.

As shown in Figs. 3(a) and 3(b), reaction layer 106 is formed by dripping a reagent 202 containing an enzyme and a hydrophilic polymer having no double bond of oxygen atoms, and a reagent 203 containing a mediator and a hydrophilic polymer having no double bond of oxygen atoms, in order, on the tip end sides of working electrode 101 and counter electrode 102 exposed at cavity 103, before cover layer 130 is stacked on spacer layer 120. Further, a hydrophilizing agent such as a surfactant or phospholipid is applied to an inner wall of cavity 103 to smoothly supply the sample such as blood into cavity 103.

Specifically, reaction layer 106 includes an enzyme layer 106b containing the enzyme and the hydrophilic polymer having no double bond of oxygen atoms on electrode layer 110, and a mediator layer 106c stacked on enzyme layer 106b and containing the mediator and the hydrophilic polymer having no double bond of oxygen atoms, and is formed as described below by a reaction layer formation step.

Namely, enzyme layer 106b is formed by dripping a predetermined amount of reagent 202 containing the enzyme and methylcellulose as the hydrophilic polymer having no double bond of oxygen atoms from a dripping apparatus 200 into cavity 103 and drying reagent 202, as shown in Fig. 3(a) (an enzyme layer formation step). Next, mediator layer 106c is formed by dripping a predetermined amount of reagent 203 containing the mediator and hydroxypropyl methylcellulose as the hydrophilic polymer having no double bond of oxygen atoms from dripping apparatus 200 into cavity 103 and drying reagent 203, as shown in Fig. 3(b) (a mediator layer formation step). Thereby, reaction layer 106 is formed.

In this manner, in the present embodiment, the enzyme layer formation step and the mediator layer formation step constitute the "reaction layer formation step" in the present invention.

As the enzyme, glucose oxidase, lactate oxidase, cholesterol oxidase, alcohol oxidase, sarcosine oxidase, fructosylamine oxidase, pyruvic oxidase, glucose dehydrogenase, lactate dehydrogenase, alcohol dehydrogenase, hydroxybutyrate dehydrogenase, cholesterol esterase, creatininase, creatinase, DNA polymerase, or the like can be used. Various sensors can be formed by selecting any of these enzymes in accordance with a substance to be measured (glucose, lactic acid, cholesterol, alcohol, sarcosine, fructosylamine, pyruvic acid, hydroxybutyric acid, or the like) for detection.

For example, when glucose oxidase or glucose dehydrogenase is used, a glucose sensor for detecting glucose in a blood sample can be formed. When alcohol oxidase or alcohol dehydrogenase is used, an alcohol sensor for detecting ethanol in a blood sample can be formed. When lactate oxidase is used, a lactic acid sensor for detecting lactic acid in a blood sample can be formed. When a mixture of cholesterol esterase and cholesterol oxidase is used, a total cholesterol sensor can be formed.

As the mediator, potassium ferricyanide, ferrocene, a ferrocene derivative, benzoquinone, a quinone derivative, an osmium complex, a ruthenium complex, or the like can be used.

As the hydrophilic polymer having no double bond of oxygen atoms, hydroxypropyl methylcellulose, hydroxypropyl cellulose, methylcellulose, hydroxyethyl cellulose, hydroxyethyl methylcellulose, polyvinyl alcohol, polyethylene glycol, or the like can be used. It is noted that the hydrophilic polymers having no double bond of oxygen atoms which are mixed into reagents 202, 203 together with the enzyme and the mediator, respectively, serve as thickening agents. Further, two or more types of the hydrophilic polymers having no double bond of oxygen atoms may be combined for use.

As the hydrophilizing agent, a surfactant such as Triton X100 (manufactured by Sigma-Aldrich Co.), Tween 20 (manufactured by Tokyo Chemical Industry Co., Ltd.), or sodium bis(2-ethylhexyl) sulfosuccinate, or phospholipid such as lecithin can be used. Further, the hydrophilizing agent may be mixed into each of reagents 202, 203 and dripped into cavity 103, or may be dripped into cavity 103 after a reagent layer is formed, instead of being applied to cavity 103 as described above. In addition, a buffer such as phosphoric acid may be provided to decrease variations in the concentration of ions contained in a sample.

Next, after reaction layer 106 is formed in cavity 103, cover layer 130 formed of a substrate made of an insulating material such as polyethylene terephthalate is stacked on spacer layer 120, and thereby biosensor 100 is formed. As shown in Figs. 1 (a) and 1 (b), air hole 105 communicating to cavity 103 when cover layer 130 is stacked on spacer layer 120 is formed in cover layer 130, and cover layer 130 is stacked on spacer layer 120 to cover cavity 103.

It is noted that, in the present embodiment, biosensor 100 is formed for the purpose of quantifying glucose in blood. Reaction layer 106 which contains GDH (glucose dehydrogenase) that uses FAD (flavin adenine dinucleotide) as a coenzyme (hereinafter referred to as FAD-GDH) as an enzyme specifically reacting with glucose representing the substance to be measured, and contains potassium ferricyanide as a mediator which will become a reducing substance as a result of reduction by electrons generated by a reaction between glucose representing the substance to be measured and FAD-GDH is provided on the tip end sides of working electrode 101 and counter electrode 102 exposed at cavity 103.

In biosensor 100 configured as described above, by bringing a blood sample into contact with sample introduction port 103a at the tip end, the sample is suctioned toward air hole 105 by a capillary phenomenon, and the sample is supplied into cavity 103. Then, as reaction layer 106 is dissolved in the sample supplied into cavity 103, electrons are emitted by an enzyme reaction between glucose representing the substance to be measured in the sample and FAD-GDH, the emitted electrons reduce ferricyanide ions, and ferrocyanide ions representing a reducing substance are produced. Subsequently, the measuring instrument quantifies glucose in the sample by measuring an oxidation current which flows between working electrode 101 and counter electrode 102 of biosensor 100 by electrochemically oxidizing the reducing substance produced by an oxidation-reduction reaction caused by the dissolution of reaction layer 106 in the sample, by applying a voltage (for example, 0.3 V) between working electrode 101 and counter electrode 102. It is noted that a current value after a lapse of three to five seconds since the application of the voltage between working electrode 101 and counter electrode 102 of biosensor 100 is measured as the oxidation current.

### (Example of Comparison of Background Currents)

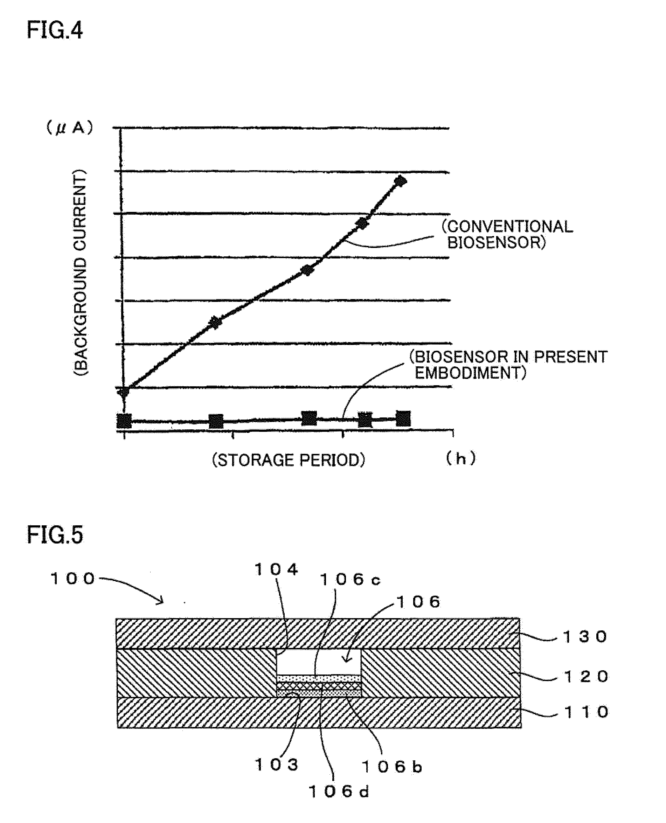

Fig. 4 shows the relation between a storage period and a background current of the biosensor. The axis of abscissas represents the storage period (h), and the axis of ordinate represents the magnitude of the background current (µA). In addition, solid diamond marks in the drawing indicate the background current of a conventional biosensor in which enzyme layer 106b and mediator layer 106c do not contain a hydrophilic polymer having no double bond of oxygen atoms, and solid square marks in the drawing indicate the background current of biosensor 100 in accordance with the present embodiment. It is noted that the background current was measured by supplying a sample for measuring the background current into cavity 103 and thereafter measuring an oxidation current as in an ordinary procedure.

As shown in Fig. 4, as the storage period of the biosensor is increased, the background current of the conventional biosensor is increased over time, whereas an increase in the background current is suppressed in biosensor 100 in accordance with the present embodiment.

As described above, according to the present embodiment, reaction layer 106 provided on the tip end sides of working electrode 101 and counter electrode 102 exposed at cavity 103 formed by slit 104 in spacer layer 120 is formed by the reaction layer formation step having the enzyme layer formation step of forming enzyme layer 106b containing the enzyme which reacts with glucose representing the substance to be measured and methylcellulose having no double bond of oxygen atoms, and the mediator layer formation step of forming the mediator layer containing the mediator and hydroxypropyl methylcellulose having no double bond of oxygen atoms. Accordingly, since enzyme layer 106b and mediator layer 106c are formed together as reaction layer 106 on the tip end sides of working electrode 101 and counter electrode 102 provided on electrode layer 110, there is no need to form enzyme layer 106b and mediator layer 106c on cover layer 130 and electrode layer 110, respectively, as in a conventional biosensor, and reaction layer 106 can be easily formed.

Further, by forming enzyme layer 106b containing the enzyme and the hydrophilic polymer having no double bond of oxygen atoms and mediator layer 106c containing the mediator and the hydrophilic polymer having no double bond of oxygen atoms, reaction layer 106 is formed with the enzyme contained in enzyme layer 106b and the mediator contained in mediator layer 106c being surrounded by the hydrophilic polymers having no double bond of oxygen atoms, and with the enzyme being separated from the mediator. As a result of the earnest study by the inventors of the present application, it is considered that, when a hydrophilic polymer has a double bond of oxygen atoms, a functional group which has a double bond of oxygen atoms performs nucleophilic attack on a mediator and thereby the mediator is reduced. Accordingly, with this configuration, since the enzyme and the mediator are surrounded by the hydrophilic polymers having no double bond of oxygen atoms, contact between the mediator and the enzyme contained in reaction layer 106 can be prevented, and reduction of the mediator by the hydrophilic polymer can be suppressed, in a state where biosensor 100 is stored.

Therefore, since each of enzyme layer 106b and mediator layer 106c contains the hydrophilic polymer having no double bond of oxygen atoms, a reaction between the enzyme contained in enzyme layer 106b and the mediator contained in mediator layer 106c can be suppressed, and reduction of the mediator in mediator layer 106c can be suppressed, in the stored state. Therefore, a biosensor which can be stored for a long period can be easily manufactured.

In addition, since mediator layer 106c is formed after enzyme layer 106b is formed, and enzyme layer 106b is arranged at a position closer to electrode layer 110, when the mediator dissolved in the sample supplied into cavity 103 diffuses toward electrode layer 110, the mediator passes through enzyme layer 106b which is rich in electrons emitted by oxidation of the substance to be measured such as glucose in the sample as a result of the enzyme reaction. Accordingly, the mediator diffusing toward electrode layer 110 is efficiently reduced, which is practical.

Further, since at least one of hydroxypropyl methylcellulose, hydroxypropyl cellulose, methylcellulose, hydroxyethyl cellulose, hydroxyethyl methylcellulose, polyvinyl alcohol, and polyethylene glycol is contained in the reagent layer as the hydrophilic polymer having no double bond of oxygen atoms, reduction of the mediator contained in the reagent layer can be prevented, and delamination of the reagent layer from electrode layer 110 or a hydrophilic layer 106a can be prevented. Thus, biosensor 100 having a practical configuration can be provided.

### <Second Embodiment>

A method for manufacturing a biosensor in accordance with a second embodiment of the present invention will be described with reference to Fig. 5. Fig. 5 is a cross sectional view of a cavity portion of a biosensor in accordance with a second embodiment of the present invention. The present embodiment is different from the first embodiment described above in that an intermediate layer 106d (a first intermediate layer) containing a hydrophilic polymer having no double bond of oxygen atoms is further formed between enzyme layer 106b and mediator layer 106c, by dripping a predetermined amount of a reagent containing the hydrophilic polymer having no double bond of oxygen atoms into cavity 103 and drying the reagent, in a first intermediate layer formation step performed after the enzyme layer formation step and before the mediator layer formation step, as shown in Fig. 5. Since other components are identical to those in the first embodiment described above, description of other components and operations thereof will not be repeated by giving the same reference numerals.

With this configuration, since intermediate layer 106d containing the hydrophilic polymer having no double bond of oxygen atoms is formed between enzyme layer 106b and mediator layer 106c by the first intermediate layer formation step, intermediate layer 106d prevents the enzyme contained in enzyme layer 106b from coming into contact with the mediator contained in mediator layer 106c. Therefore, the reaction between the enzyme contained in enzyme layer 106b and the mediator contained in mediator layer 106c can be further suppressed.

### <Third Embodiment>

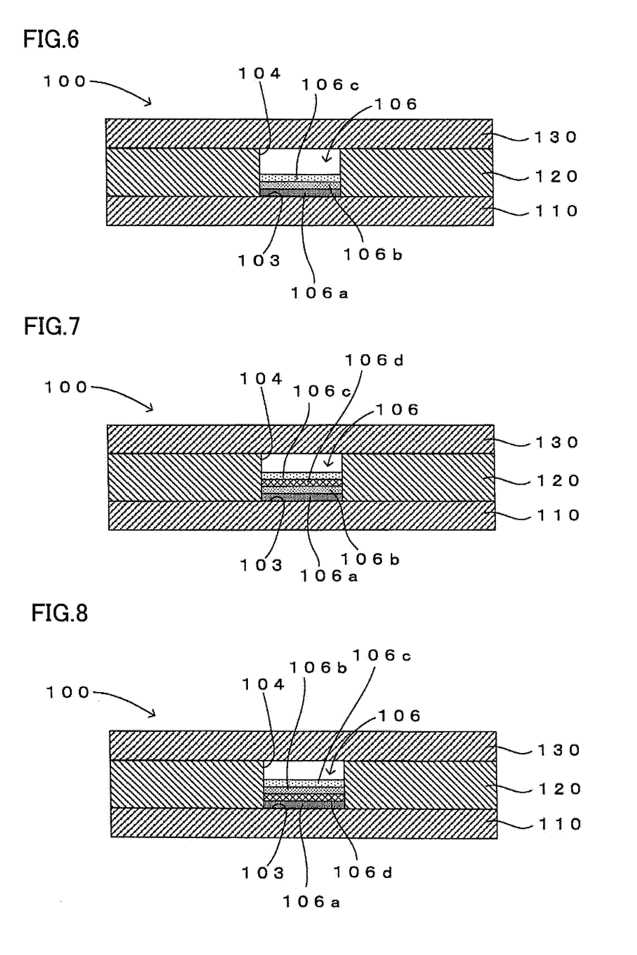

A method for manufacturing a biosensor in accordance with a third embodiment of the present invention will be described with reference to Fig. 6. Fig. 6 is a cross sectional view of a cavity portion of a biosensor in accordance with a third embodiment of the present invention. The present embodiment is different from the first embodiment described above in that a hydrophilic layer 106a is formed on electrode layer 110 before enzyme layer 106b is formed, by dripping a predetermined amount of a reagent containing carboxymethyl cellulose (CMC) as a hydrophilic polymer having a double bond of oxygen atoms into cavity 103 and drying the reagent, in a hydrophilic layer formation step performed before the enzyme layer formation step, as shown in Fig. 6. Since other components are identical to those in the first embodiment described above, description of other components and operations thereof will not be repeated by giving the same reference numerals.

With this configuration, before enzyme layer 106b is formed, hydrophilic layer 106a containing the hydrophilic polymer having a double bond of oxygen atoms (CMC) is formed by the hydrophilic layer formation step. Generally, a hydrophilic polymer having a double bond of oxygen atoms has a higher effect of inhibiting movement of blood cells and the like than a hydrophilic polymer having no double bond of oxygen atoms. Therefore, since hydrophilic layer 106a provided on electrode layer 110 contains the hydrophilic polymer having a double bond of oxygen atoms, for example when a blood sample is supplied into cavity 103 in biosensor 100, the hydrophilic polymer in hydrophilic layer 106a efficiently filters the blood sample to inhibit movement of blood cells contained in the blood sample. Thus, influence on measurement accuracy due to a difference in the hematocrit value of the blood sample can be decreased.

Therefore, accurate and reliable biosensor 100 can be provided. Further, since hydrophilic layer 106a containing the hydrophilic polymer having a double bond of oxygen atoms is provided on electrode layer 110, delamination of enzyme layer 106b stacked on hydrophilic layer 106a can be prevented.

It is noted that, as the hydrophilic polymer having a double bond of oxygen atoms, a polymer having a carbonyl group, an acyl group, a carboxyl group, an aldehyde group, a sulfo group, a sulfonyl group, a sulfoxide group, a tosyl group, a nitro group, a nitroso group, an ester group, a keto group, a ketene group, or the like can be used. Further, two or more types of the hydrophilic polymers having a double bond of oxygen atoms may be combined for use.

In addition, in biosensor 100 of Fig. 5, hydrophilic layer 106a may be formed on electrode layer 110 by the hydrophilic layer formation step before enzyme layer 106b is formed, as shown in a cross sectional view of a cavity portion of a variation of the biosensor of Fig. 7. Also with this configuration, the same effect can be obtained.

### <Fourth Embodiment>

A method for manufacturing a biosensor in accordance with a fourth embodiment of the present invention will be described with reference to Fig. 8. Fig. 8 is a cross sectional view of a cavity portion of a biosensor in accordance with a fourth embodiment of the present invention. The present embodiment is different from the third embodiment described above in that intermediate layer 106d (a second intermediate layer) containing a hydrophilic polymer having no double bond of oxygen atoms is further formed between hydrophilic layer 106a and enzyme layer 106b, by dripping a predetermined amount of a reagent containing the hydrophilic polymer having no double bond of oxygen atoms into cavity 103 and drying the reagent, in a second intermediate layer formation step performed after the hydrophilic layer formation step and before the enzyme layer formation step, as shown in Fig. 8. Since other components are identical to those in the first embodiment described above, description of other components and operations thereof will not be repeated by giving the same reference numerals.

With this configuration, since intermediate layer 106d containing the hydrophilic polymer having no double bond of oxygen atoms is formed between hydrophilic layer 106a and enzyme layer 106b by the second intermediate layer formation step, intermediate layer 106d prevents the hydrophilic polymer having a double bond of oxygen atoms contained in hydrophilic layer 106a from coming into contact with the mediator contained in mediator layer 106c. Thus, reduction of the mediator contained in mediator layer 106c by the hydrophilic polymer in hydrophilic layer 106a can be suppressed.

In addition, in biosensor 100 of Fig. 7, intermediate layer 106d may be formed on hydrophilic layer 106a by the second intermediate layer formation step before enzyme layer 106b is formed, as shown in a cross sectional view of a cavity portion of a variation of the biosensor of Fig. 9. Also with this configuration, the same effect can be obtained.

It is noted that the present invention is not limited to the embodiments described above, and various modifications other than those described above can be made without departing from the purport of the present invention. For example, by combining plural types of hydrophilic polymers having no double bond of oxygen atoms and appropriately mixing them, movement of blood cells in the blood sample can be effectively inhibited, and diffusion and mixing of the enzyme layer and the mediator layer can be decreased to obtain the effect of suppressing reduction of the mediator.

Furthermore, by changing a combination of the enzyme and the mediator to be contained in reaction layer 106 of biosensor 100 described above, an ethanol sensor, a lactic acid sensor, or the like may be formed.

In addition, although biosensor 100 is formed to have a dual-electrode structure having working electrode 101 and counter electrode 102 in the embodiments described above, biosensor 100 may be formed to have a triple-electrode structure by further providing a reference electrode. In this case, it is only necessary to apply a predetermined potential based on counter electrode 102 to working electrode 101, while counter electrode 102 is grounded and a reference potential is applied to the reference electrode by a voltage output portion.

Further, although supply of a blood sample into cavity 103 is detected by monitoring a current which flows between working electrode 101 and counter electrode 102 by applying a predetermined voltage between working electrode 101 and counter electrode 102 in the embodiments described above, a sensing electrode for sensing supply of a sample into cavity 103 may be further provided. In this case, it is only necessary to detect supply of a sample into cavity 103 by monitoring a current which flows between counter electrode 102 and the sensing electrode by applying a predetermined voltage between counter electrode 102 and the sensing electrode.

Furthermore, of electrode layer 110, spacer layer 120, and cover layer 130 forming biosensor 100, at least cover layer 130 is desirably formed of a transparent member such that supply of a blood sample into cavity 103 can be visually recognized.

### INDUSTRIAL APPLICABILITY

The present invention is widely applicable to a biosensor including an electrode layer in which an electrode system including a working electrode and a counter electrode is provided, a spacer layer in which a slit for forming a cavity is formed and which is stacked on the electrode layer, a cover layer in which an air hole communicating to the cavity is formed and which is stacked on the spacer layer, and a reaction layer provided on the working electrode and the counter electrode.

### REFERENCE SIGNS LIST

100: biosensor; 101: working electrode; 102: counter electrode; 103: cavity; 104: slit; 105: air hole; 106: reaction layer; 106a: hydrophilic layer; 106b: enzyme layer; 106c: mediator layer; 106d: intermediate layer (first intermediate layer, second intermediate layer); 110: electrode layer; 120: spacer layer; 130: cover layer

## Claims

1. A method for manufacturing a biosensor including:
an electrode layer in which an electrode system including a working electrode and a counter electrode is provided on one surface of an insulating substrate;
a spacer layer in which a slit is formed and which is stacked on said one surface of said electrode layer with said slit being arranged on tip end sides of said working electrode and said counter electrode;
a cavity which is formed by said electrode layer and said slit and into which a sample is to be supplied;
a cover layer in which an air hole communicating to said cavity is formed and which is stacked on said spacer layer to cover said cavity; and
a reaction layer provided on the tip end sides of said working electrode and said counter electrode exposed at said cavity,
said method comprising a reaction layer formation step having:
an enzyme layer formation step of forming an enzyme layer containing an enzyme which reacts with a substance to be measured and a hydrophilic polymer having no double bond of oxygen atoms; and
a mediator layer formation step of forming a mediator layer containing a mediator and a hydrophilic polymer having no double bond of oxygen atoms.

2. The method for manufacturing a biosensor according to claim 1, wherein said reaction layer formation step further has a first intermediate layer formation step of forming a first intermediate layer containing a hydrophilic polymer having no double bond of oxygen atoms, performed after said enzyme layer formation step and before said mediator layer formation step.

3. The method for manufacturing a biosensor according to claim 1 or 2, wherein said reaction layer formation step further has a hydrophilic layer formation step of forming a hydrophilic layer containing a hydrophilic polymer having a double bond of oxygen atoms, performed before said enzyme layer formation step.

4. The method for manufacturing a biosensor according to claim 3, wherein said reaction layer formation step further has a second intermediate layer formation step of forming a second intermediate layer containing a hydrophilic polymer having no double bond of oxygen atoms, performed after said hydrophilic layer formation step and before said enzyme layer formation step.

5. The method for manufacturing a biosensor according to any of claims 1 to 4, wherein said hydrophilic polymer having no double bond of oxygen atoms includes at least one of hydroxypropyl methylcellulose, hydroxypropyl cellulose, methylcellulose, hydroxyethyl cellulose, hydroxyethyl methylcellulose, polyvinyl alcohol, and polyethylene glycol.

6. The method for manufacturing a biosensor according to any of claims 1 to 5, wherein said hydrophilic polymer having a double bond of oxygen atoms includes at least carboxymethyl cellulose.
